# EUROPÄISCHE PATENTSCHRIFT

(11) **EP 2 091 776 B1**
(45) Veröffentlichungstag und Bekanntmachung des Hinweises auf die Patenterteilung: **01.02.2012**
(21) Anmeldenummer: 07819862.9
(22) Anmeldetag: 19.11.2007
(51) Int. Cl.: B60N 2/20, B60N 2/225

(54) **FAHRZEUGSITZ MIT EINEM NEIGUNGSVERSTELLER MIT FREISCHWENKFUNKTIONALITÄT**
VEHICLE SEAT WITH AN INCLINATION ADJUSTMENT DEVICE WITH A FREE-PIVOTING FUNCTIONALITY
SIÈGE DE VÉHICULE AVEC UN DISPOSITIF DE RÉGLAGE D'INCLINAISON À FONCTIONNALITÉ DE LIBRE PIVOTEMENT

(30) Priorität: 17.11.2006 DE 102006054610; 28.12.2006 DE 102006062462; 07.09.2007 DE 102007042604
(43) Veröffentlichungstag der Anmeldung: 26.08.2009
(73) Patentinhaber: Johnson Controls GmbH, 51399 Burscheid (DE)
(72) Erfinder: KIENKE, Ingo, 42929 Wermelskirchen (DE); MAHARAJAPURAM, Karthikeyan S., 51381 Leverkusen (DE); KIRUBAHARAN, Albert Reginold, 51399 Burscheid (DE)
(74) Vertreter: Wolff, Felix
(86) Internationale Anmeldenummer: PCT/EP2007/009986
(87) Internationale Veröffentlichungsnummer: WO 2008/058762

(56) Entgegenhaltungen:
- WO-A-2006/040303
- DE-A1-102004 015 234
- DE-A1-102005 021 356

## Beschreibung

Die Erfindung betrifft einen Neigungsversteller mit einem als Verstellgetriebe ausgebildeten Planetenantrieb für einen Fahrzeugsitz. Der Neigungsversteller ist einerseits durch Betätigung des Verstellgetriebes geeignet, die Neigung der Rückenlehne eines Fahrzeugsitzes gegenüber dem Sitzteil stufenlos zu verstellten. Darüber hinaus weist der Neigungsversteller Mittel (Freischwenkeinrichtung) auf, die Rückenlehne unabhängig vom Verstellgetriebe nach vorne in eine Easy-Entry-Stellung (z. B. um 45° nach vorne geneigt) und/oder in eine waagerechte Tischposition zu verklappen. Das Verstellgetriebe ist hierbei insbesondere als ein sogenanntes Taumelgetriebe vorgesehen.

Solche Neigungsversteller sind allgemein bekannt. Beispielsweise ist aus der deutschen Öffenlegungsschrift DE 10 2004 015 234 A1 ein Neigungsverstellbeschlag mit einem sitzteilfesten Beschlagtell und einem lehnenfesten Beschlagteil bekannt, wobei eine Neigungsverstellung der Rückenlehne in einen Komfortbereich vorgesehen ist und wobei ein Verrastmechanismus mit Entriegelungsmögllchkeit ein freies Klappen des lehnenfesten Beschlagteils gegenüber dem sitzteilfesten Beschlagtell ermöglicht. Hierbei ist nachteilig, dass gegenüber einem einfachen Neigungsverstellbeschlag eine weitere in axialer Richtung beabstandete Funktionsebene erforderlich ist, was mit zusätzlichem Platzbedarf und ferner dem Risiko von Fehlfunktionen, insbesondere mit Blick auf Unfallsituationen, verbunden ist. Aus der Druckschrift DE 10 2005 021356 A1 stein Fahrzeugsitz mit den Merkmalen des Oberbegriffs des Anspruchs 1 bekannt.

Eine Aufgabe der vorliegenden Erfindung ist es daher, einen Neigungsverstellbeschlag zu schaffen, bei dem eine hoch kompakte und gleichzeitig hochstabile Ausführung gewählt wird, so dass ein solcher Neigungsverstellbeschlag zum einen leicht, kostengünstig und lebensdauerstabil herstellbar ist und zum anderen hohe Widerstandskräfte, insbesondere In Unfallsituationen, bereitstellen kann.

Diese Aufgabe wird durch einen fahrzeugsitz, insbesondere Kraftfahrzeugsitz, mit einem Lehnenteil, mit einem Sitzteil und mit einem Beschlag zur Neigungsverstellung des Lehnenteils relativ zum Sitzteil gelöst, wobei der Beschlag ein mit dem Lehnenteil fest verbundenes erstes Beschlagteil und ein mit dem Sitzteil fest verbundenes zweites Beschlagteil aufweist, wobei die Beschlagteile über ein Verstellgetriebe stufenlos winkelverstellbar miteinander verbunden sind, wobei das erste Beschlagteil mittels einer Rastvorrichtung gegenüber dem Verstellgetriebe arretierbar ist und nach Lösung der Rastvorrichtung gegenüber dem Verstellgetriebe um eine Schwenkachse verschwenkbar ist, wobei das Verstellgetriebe eine innenverzahnte Getrieberastplatte und/oder eine innenverzahnte Getriebeplatte aufweist und wobei das erste Beschlagteil in einer senkrecht zur Drehachse verlaufenden Ebene der innenverzahnung der Getrieberastplatte und/oder der Getriebeplatte gegenüber dem Verstellgetriebe gelagert ist. Solch ein Fahrzeugsitz entspricht des Oberbegriffs des Anspruchs 1.

Der erfindungsgemäßen Fahrzeugsitz ist dadurch gekennzeichnet, dass der Beschlag eine Lagerplatte aufweist und das erste Beschlagteil zusätzlich zur Getriebeplatte von der Lagerplatte radial gelagert ist.

Hierdurch wird es erfingdungsgemäß vorteilhaft möglich, dass die Lagerebene des (lehnenteilfesten) ersten Beschlagteils um einen Teil des Verstellgetriebes bzw. des Taumelgetriebes innerhalb des Bereichs bzw. der Ebene der Getriebeverzahnungen vorgesehen ist. Hierdurch ist eine besonders kompakte Bauweise des Verstellbeschlags möglich.

Weitere Merkmale von bevorzugten Ausführungsformen der Erfindung sind in den abhängigen Ansprüchen enthalten.

In einem der bevorzugten Ausführungsformen ist das Verstellgetriebe eine innenverzahnte Getrieberastplatte und/oder eine innenverzahnte Getriebeplatte aufweist sowie die Getriebeplatte und/oder die Getrieberastplatte als ebene Stanzteile vorgesehen bzw. wobei gemäß einer weiteren bevorzugten Ausführungsform das Verstellgetriebe eine innenverzahnte Getrieberastplatte und/oder eine innenverzahnte Getriebeplatte aufweist sowie das erste Beschlagteil von der Getriebeplatte radial gelagert ist und/oder das erste Beschlagteil von der Getrieberastplatte axial gelagert ist. Durch das Vorsehen der Getriebeplatte und/oder der Getrieberastplatte als ebene Stanzteile ist es erfindungsgemäß vorteilhaft möglich, diese besonders einfach und kostengünstig herzustellen. Ferner ist es dadurch erfindungsgemäß in einfacher und kostengünstiger Weise möglich, eine Skalierbarkeit des Rastbeschlags des erfindungsgemäßen Fahrzeugsitzes für verschiedene Belastungsszenarien bzw. Anwendungsfälle (etwa als sogenannter

Gurtintegralsitz oder als Sitz ohne Gurtintegration) zu ermöglichen. Durch die radiale Lagerung des ersten Beschlagteils durch die Getriebeplatte und/oder durch die axiale Lagerung des ersten Beschlagteils durch die Getrieberastplatte ist es erfindungsgemäß vorteilhaft möglich, den Kraftfluss innerhalb des Beschlags des erfindungsgemäßen Fahrzeugsitzes derart auszugestalten, dass die auftretenden Kippmomente vergleichsweise gering bleiben und daher eine besonders stabile Ausgestaltung bzw. ein besonders hohes Belasfungsvermögen des Beschlags mit vergleichsweise geringem Materialeinsatz und daher auch geringen Kosten und notwendigem Bauraum möglich ist

Insbesondere ist es erfindungsgemäß vorgesehen dass der Beschlag eine Abschlussplatte aufweist und das erste Beschlagtell einerselts von der Getrieberastplatte und andererseits von der Abschlussplatte axial gelagert ist. Hierdurch kann dem erfindungsgemäßen Rastbeschlag bzw. Fahrzeugsitz mit entsprechendem Rastbeschlag eine besonders große Stabilität verliehen werden.

Weiterhin ist es erfindungsgemäß bevorzugt, wenn die Getrieberastplatte, die Getriebeplatte, Lagerplatte und die Abschlussplatte fest miteinander verbunden vorgesehen sind, insbesondere geschweißt sind bzw. wenn der Beschlag zwei Beschlagelemente splegelsymmetrisch zu einer senkrecht zur Drehachse verlaufenden Symmetrieebene aufweist, wobei Jedes der Beschlagelemente entweder die Getrieberastplatte und die Getriebeplatte und die Lagerplatte und die Abschlussplatte oder aber die Getrieberastplatte und die Getriebeplatte und die Abschlussplatte aufweist. Hierdurch kann in besonderer Weise eine Skalierbarkeit der Belastung herbeigeführt werden.

Erfindungsgemäß ist es auch bevorzugt, dass das Lehnenteil in mindestens einer Position an dem zweiten Beschlagteil oder an einer direkt mit dem Sitzteil verbundenen Halterung arretierbar ist bzw. dass die Rastvorrichtung eine Rastklinke ist, wobei die Rastklin insbesondere mit einer Sperrnocke verriegelbar und betätigbar vorgesehen ist.

Es kann ferner erfindungsgemäß vorteilhaft auch vorgesehen sein, dass der Beschlag zwei Beschlagelemente spiegelsymmetrisch zu einer senkrecht zur Drehachse verlaufenden Symmetrieebene aufweist, wobei jedes der Beschlagelemente die Getrieberastplatte und/oder die Getriebeplatte aufweist und wobei jedes der Beschlagelemente wenigstens eine außenverzahnte Lehnengetriebeplatte aufweist, wobei zwischen den Beschlagelementen ein Konturversatz des Eingriffs der jeweiligen Getrieberastplatte und/oder der jeweiligen Getriebeplatte in der jeweiligen wenigstens einen Lehnengetriebeplatte vorgesehen ist. Hierdurch ist es erfindungsgemäß vorteilhaft möglich, dass einerseits die Beweglichkeit bzw. Leichtgängigkeit des Verstellbeschlags des erfindungsgemäßen Fahrzeugsitzes erhöht wird und gleichzeitig die Geräuschentwicklung bei einer Betätigung des Verstellbeschlags reduziert wird, wobei jedoch immer eine vergleichsweise hohe Unfallsicherheit dadurch erzielt wird, dass die mitlaufenden, sich jedoch im Normalfall nicht berührenden Verzahnungen in einem solchen Fall eines Unfallgeschehens eine zusätzliche Verstärkungswirkung gegen beispielsweise eine ungewollt große Drehverstellung des ersten Beschlagteils herbeiführen. Ein entsprechender Konturversatz kann erfindungsgemäß in vorteilhafter Weise auch zwischen den jeweiligen Getrieberastplatten der Beschlagelemente bei deren Eingriff mit der Rastklinke vorgesehen sein, so dass die Verriegelung durch die Rastklinke in vorteilhafter Weise einfach bedienbar und leichtgängig ist.

Es ist damit erfindungsgemäß auch bei einem Fahrzeugsitz ohne Freischwenkmöglichkeit des ersten Beschlagteils möglich, eine Geräuschreduzieung während des Verstellvorgangs und eine größere Leichtgängigkeit mit einer größeren Unfallsicherheit bzw. Stabilität zu vereinen. Dies wird mittels eines Fahrzeugsitzes mit einem Lehnenteil, mit einem Sitzteil und mit einem Beschlag zur Neigungsverstellung des Lehnenteils relativ zum Sitzteil ermöglicht, wobei der Beschlag ein mit dem Lehnenteil fest verbundenes erstes Beschlagteil und ein mit dem Sitzteil fest verbundenes zweites Beschlagteil aufweist, wobei die Beschlagteile über ein Verstellgetriebe stufenlos winkelverstellbar miteinander verbunden sind, wobei der Beschlag zwei Beschlagelemente spiegelsymmetrisch zu einer senkrecht zur Drehachse verlaufenden Symmetrieebene aufweist, wobei jedes der Beschlagelemente die Getrieberastplatte und/oder die Getriebeplatte aufweist und wobei jedes der Beschlagelemente wenigstens eine außenverzahnte Lehnengetriebeplatte aufweist, wobei zwischen den Beschlagelementen ein Konturversatz des Eingriffs der jeweiligen Getrieberastplatte und/oder der jeweiligen Getriebeplatte in der jeweiligen wenigstens einen Lehnengetriebeplatte vorgesehen ist. Es wird damit ein Getriebe mit wenigstens zwei Verzahnungspaaren, insbesondere mindestens zwei Zahnradpaaren, realisiert, bei dem es erfindungsgemäß vorgesehen ist, dass in normalem Betrieb nur ein Teil der Verzahnungspaare den Lastpfad im Getriebe ausbildet, bei einer Überlast (z. B. bei einem Unfall) jedoch auch die übrigen Verzahnungspaare Last aufnehmen und damit den ersten Lastpfad entlasten. Verzugsweise weisen alle Verzahnungspaare im Wesentlichen die gleiche Kontur auf, wobei die nur bei Überlast tragenden Verzahnungen gegenüber den tragenden Verzahnungen einen geringen Konturversatz derart aufweisen, dass sie einander gerade nicht berühen. Bei einer Überlast verformen oder verlagern sich die tragenden Verzahnungen derart, dass auch die bisher kontaktlosen Verzahnungspaare in Kontakt kommen. Auf diese Weise werden die Reibungsverluste im normalen Betrieb des Getriebes verringert, ohne die Festigkeit im Falle einer Überlast einzuschränken.

Die Figuren stellen beispielhaft und schematisch eine Ausführung der Erfindung dar. Im Ausführungsbeispiel ist der Neigungsversteller im Wesentlichen spiegelbildlich aufgebaut.
Figuren 1 und 2 zeigen einen Neigungsversteller bzw. Beschlag in zwei verschiedenen Neigungspositionen.
Figur 3 zeigt den Neigungsversteller bzw. Beschlag in einer Explosionsdarstellung.
Figur 4 zeigt den Neigungsversteller bzw. Beschlag in einer Schnittdarstellung.
Figuren 5 bis 9 zeigen Teile des Neigungsverstellers bzw. Beschlags in verschiedenen Darstellungen.
Figuren 10 bis 12 zeigen weitere Explosionsdarstellungen des Neigungsverstellers bzw. Beschlags.
Figuren 13 bis 15 zeigen Teile des Neigungsverstellers bzw. Beschlags in verschiedenen Darstellungen zur Veranschaulichung eines Konturversatzes.
Figur 16 zeigt eine zusätzliche Explosionsdarstellung des Neigungsverstellers bzw. Beschlags.
Figur 17 zeigt noch eine zusätzliche Explosionsdarstellung des Neigungsverstellers bzw. Beschlags.

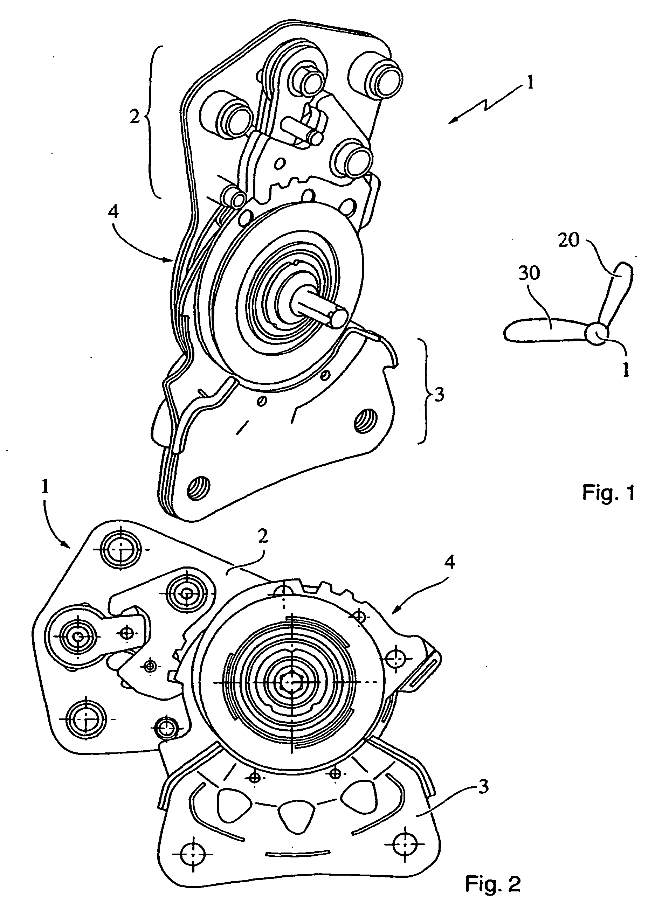

Der in Figur 1 gezeigte Neigungsversteller 1 bzw. Beschlag 1 umfasst ein erstes Beschlagteil 2, welches fest mit einer Rückenlehne 20 eines im rechten Teil der Figur 1 schematisch dargestellten Fahrzeugsitzes verbunden ist, sowie ein zweites sitzteilfestes Beschlagteil 3. Beide Beschlagteile 2, 3 sind über ein Verstellgetriebe 4 stufenlos winkelverstellbar miteinander verbunden. Das Verstellgetriebe 4 ist erfindungsgemäß insbesondere als ein Taumelgetriebe 4 ausgebildet und wird daher im Folgenden auch als Taumelgetriebe 4 bezeichnet. Hinsichtlich des Aufbaus und der Funktion derartiger Getriebe wird auf die Druckschrift WO 20061040303 A2 verwiesen, deren Offenbarungsgehatt hiermit zur Gänze mittels Bezugnahme in die vorliegende Beschreibung aufgenommen wird. Das erste Beschlagteil 2 ist ferner nach dem Lösen einer Rastklinke 5 gegenüber dem Verstellgetriebe 4 aus der Gebrauchsstellung nach Figur 1 in eine Tischposition nach Figur 2 verschwenkbar und dort emeut verriegelbar.

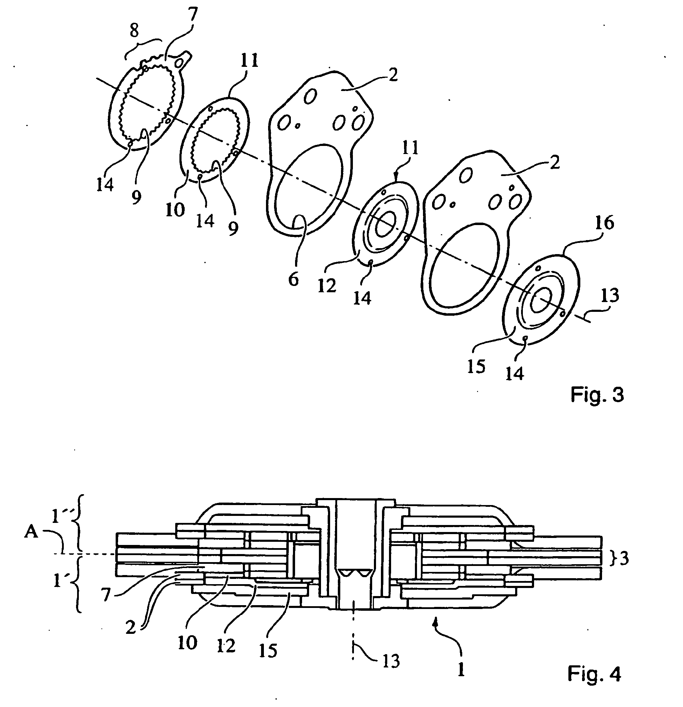

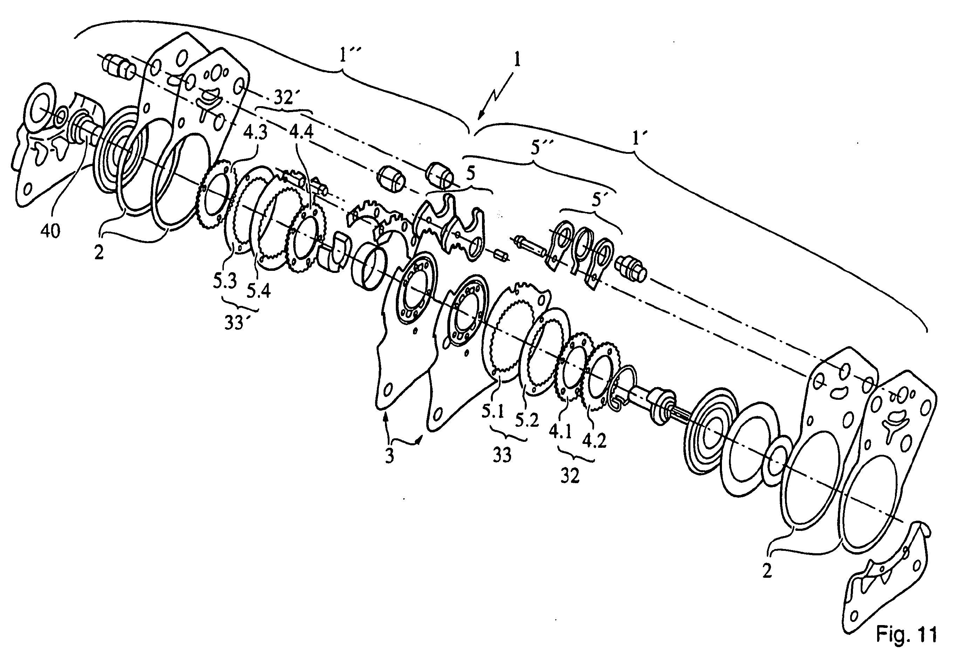

Wie aus Figur 3 ersichtlich, weist das paarig (d.h. insbesondere zwei Teile, insbesondere Blechteile, aufweisend) aufgebaute erste Beschlagteil 2 eine kreisförmige Ausnehmung 6 auf, mittels derer es sich am Verstellgetriebe 4 drehbar abstüzt. Das in Figur 3 lediglich auszugsweise dargestellte Verstellgetriebe 4 umfasst eine Getrieberastplatte 7 mit einer partiellen äußeren Verzahnung 8 für den Eingriff der Rastklinke 5 und einer inneren Verzahnung 9 als Bestandteil des Planetenantriebs, sowie eine äußere Getriebeplatte 10 mit einem kreisrunden Außenumfang 11 und einer inneren Verzahnung 9. Getrieberastplatte 7 und Getriebeplatte 10 sind ebenso wie das erste Beschlagteil 2 insbesondere als ebene Stanzteile ausgeführt. Zusätzlich ist eine Lagerplatte 12 vorgesehen, welche insbesondere gestanzt und gepresst ist und gleichfalls einen kreisrunden Außenumfang 11 aufweist. Der Außenumfang 11 von Getriebeplatte 10 und Lagerplatte 12 ist so bemessen, dass die Ausnehmung 6 des ersten Beschlagteils darauf im Wesentlichen spielfrei drehbar gelagert ist. Die Getrieberastplatte 7 sichert das erste Beschlagteil 2 dabei in die eine Richtung axial, während eine zusätzliche Abschlussplatte 15 mit einem vergrößerten Außenumfang 16 die Axialsicherung in der anderen Richtung bildet. Die Lagerplatte 12 stellt darüber hinaus auch eine Lagerung für ein zentral angeordnetes, in Figur 3 jedoch nicht dargestelltes Lagerteil 40 (vgl. Figur 11) zur Verfügung.

Getrieberastplatte 7, Getriebeplatte 10, Lagerplatte 12 und Abschlussplatte 15 werden nach dem Aufsetzen der (die Ausnehmung 6 aufweisenden) Platten des ersten Beschlagteils 2 koaxial zur Drehachse 13 der Freischwenkeinrichtung miteinander verbunden, insbesondere laserverschweißt. Deckungsgleiche Bohrungen 14 in den Bauteilen erleichtem durch Einschieben einer Montageeinrichtung die passgenaue Ausrichtung.

Figur 4 zeigt einen Schnitt durch den montierten Neigungsversteller 1 bzw. Beschlag 1. Hierbei ist der in der Figur 4 dargestellte Beschlag 1 derart aufgebaut, dass der Beschlag 1 insgesamt ein erstes Beschlagelement 1' und ein zweites Beschlagelement 1" aufweist. Die Beschlagelemente 1', 1" sind bezüglich einer Symmetrieebene A im Wesentlichen symmetrisch ausgebildet. Hierbei bedeutet im Wesentlichen symmetrisch ausgebildet, dass die Beschlagelemente 1', 1" in ihrem radial äußeren, d.h. von der Drehachse 13 vergleichsweise weit entfernten, Bereich im Wesentlichen vollständig spiegelsymmetrisch relativ zur Symmetrieachse A ausgebaut sind.

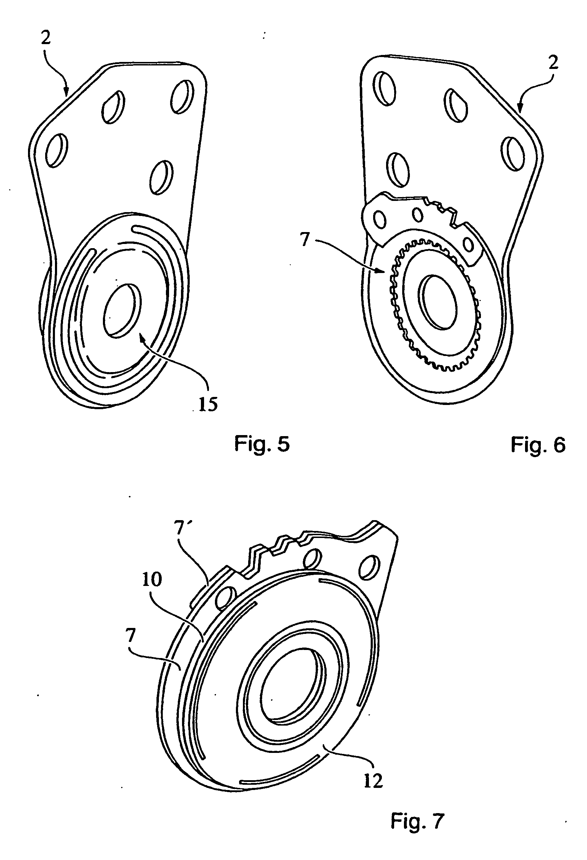

Die Figuren 5 bis 9 zeigen Teile des Neigungsverstellers 1 bzw. Beschlags 1 in verschiedenen Darstellungen. Hierbei zeigen die Figuren 5, 6, 8 und 9 je eine perspektivische Darstellung der in der Figur 3 dargestellten Teile bzw. Komponenten des Beschlags 1 in zusammengebauter Form (wobei durch die Verdeckung ein Teil dieser Komponenten bzw. Teile nicht sichtbar ist), nämlich das erste Beschlagteil 2. die innenverzahnte und teilweise außenverzahnte Getrieberastplatte 7 und die Abschlussplatte 15. Die Figur 7 zeigt eine perspektivische Darstellung der meisten (nämlich ohne das erste Beschlagteil 2) der in der Figur 3 dargestellten Teile bzw. Komponenten des Beschlags 1 in zusammengebauter Form (wobei durch die Verdeckung ein Teil dieser Komponenten bzw. Teile nicht sichtbar ist), nämlich die innenverzahnte und teilweise außenverzahnte Getrieberastplatte 7, die Getriebeplatte 10 und die Lagerplatte 12. Hierbei ist insbesondere in der Figur 7 erkennbar, dass die Getrieberastplatte 7 in einem radial äußeren Bereich und in einem axial von der Getriebeplatte 10 abgewandten Bereich ein Verstärkungselement 7' aufweist, mittels dem zum einen eine Verstärkung der Haltekraft der Verriegelung des ersten Beschlagteils 2 mit der Getrieberastplatte 7 herbeigeführt werden kann und mittels dem ferner in einfacher Weise eine Verbindung mit der entsprechenden Getrieberastplatte eines (nicht dargestellten) spiegelsymmetrisch angeordneten Beschlagelements 1'. 1" herbeigeführt werden kann. In diesem zuletzt genannten Fall ist das Verstärkungselement 7' in bevorzugter Weise lediglich einmal vorhanden und verbindet die Getrieberastplatten 7 der beiden Beschlagelemente 1', 1". Zur Befestigung bzw. Ausrichtung (vor einer Verbindung des Verstärkungselements 7' mit den Getrieberastplatten 7) des Verstärkungselements 7' relativ zu den Getrieberastplatten 7 können in bevorzugter Weise Vertiefungen bzw. Ausnehmungen und Pins bzw. Nasen am Verstärkungselement 7' bzw. den Getrieberastplatten 7 vorhanden sein. Insofern sind die Getrieberastplatten 7 ggf. nicht vollständig eben, jedoch auf dem größten Teil ihrer Fläche (nämlich außerhalb der Pins bzw. Nasen zur Befestigung bzw. Ausrichtung mit dem Verstärkungselement 7') eben und daher insgesamt als im Wesentlichen eben aufzufassen.

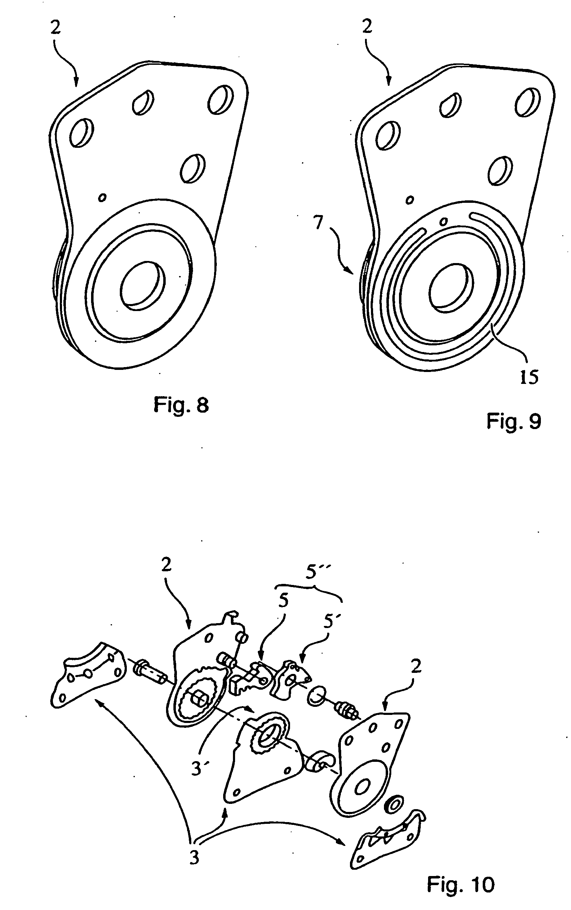

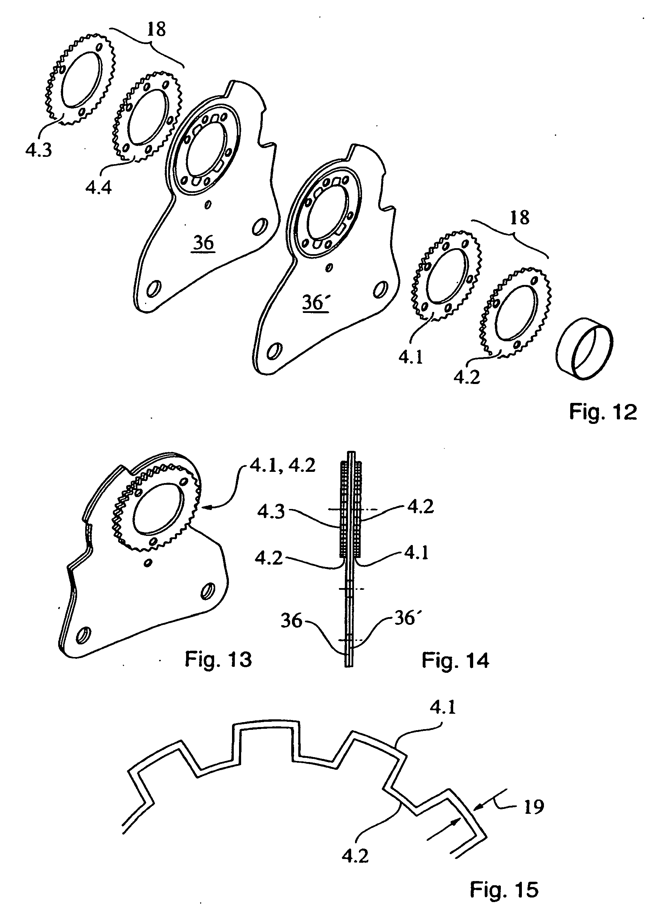

In den Figuren 10 bis 12 sind weitere Explosionsdarstellungen des Neigungsverstellers 1 bzw. Beschlags 1 dargestellt. Hierbei zeigt Figur 10 eine Explosionsdarstellung eines aus zwei Beschlagelementen 1', 1" aufgebauten Beschlags 1, wobei das erste Beschlagteil 2 dargestellt ist. Das zweite Beschlagteil 3 ist mit einem außenverzahnten und mit den Innenverzahnungen der Getrieberastplatte 7 und/oder der Getriebeplatte 10 in Eingriff stehenden Element 3' ausgestattet. Aus der Figur 10 geht ferner die mit der teilweisen Außenverzahnung der Getrieberastplatte 7 verriegelbare und entriegelbare Rastklinke 5 hervor. Die Rastklinke 5 wirkt insbesondere mit einer Spermocke 5' zusammen, um das erste Beschlagteil 2 entweder mit der Getrieberastplatte 7 zu verriegeln oder zu entriegeln. Daher wird im Folgenden die Rastklinke 5 (zusammenmit der Sperrnocke 5') auch als Rastvorrichtung 5" bezeichnet. In Figur 11 ist ebenfalls eine Explosionsdarstellung eines aus zwei Beschlagelementen 1', 1" aufgebauten Beschlags 1, wobei das erste Beschlagteil 2, die Rastvorrichtung 5", das zweite Beschlagteil 3 sowie die Beschlagelemente 1', 1" dargestellt ist bzw. sind. In der Figur 11 sind ferner zwei spiegelbildlich zueinander angeordnete Gruppen 32, 32' von außenverzahnten Zahnrädern 4.1 bis 4.4 und zwei spiegelbildlich zueinander angeordnete Gruppen 33, 33' von innenverzahnten Zahnrädern 5.1 bis 5.4 dargestellt. Dabei ist jeweils ein außenverzahntes Zahnrad 4.1 bis 4.4 einem innenverzahnten Zahnrad 5.1 bis 5.4 mit gleichem Index zur Ausbildung eines Zahnradpaars zugeordnet. In Figur 12 bis Figur 14 sind nur noch die außenverzahnten Zahnräder 4.1 bis 4.4 dargestellt, welche auf Halteteile 36, 36' aufgesetzt werden. Im Ausführungsbeispiel sind alle innenverzahnten Zahnräder 5.1 bis 5.4 im Rahmen der Fertigungstoleranzen exakt konturgleich ausgeführt. Die außenverzahnten Zahnräder 4.2 bis 4.4 weisen jedoch gegenüber dem nur im Wesentlichen konturgleichen Zahnrad 4.1 einen geringen Konturversatz 19 von ihrer Mittelachse 37 weg auf (Figur 15), beispielsweise um 0.1 mm (entspricht etwa dem 0,001 bis 0,002 fachen des Außendurchmessers der Zahnräder 4.1 bis 4.4). In normalem Betrieb (Halte- und Verstellfunktion des Verstellgetriebes 1) befindet sich somit nur ein Zahnradpaar aus den Zahnrädern 4.1 und 5.1 in Eingriff, während die übrigen Zahnräder 4.2 bis 4.4 und 5.2 bis 5.4 kontaktlos mitdrehen. Bei einer Überlast wird dieser Versatz bzw. Konturversatz 19 durch elastische, ggf. auch plastische Deformation von Zahnrad 4.1 und/oder 5.1 kompensiert, so dass nachfolgend alle Zahnräder 4.1 bis 4.4 und 5.1 bis 5.4 tragen. Im vorliegenden Falle entsprechen beispielsweise die Zahnräder 5.1 und 5.2 den Innenverzahnungen der Getrieberastplatte 7 und der Getriebeplatte 10 für das erste Beschlagelement 1' und es entsprechen die Zahnrädern 5.4 und 5.3 den Innenverzahnungen der Getrieberastplatte 7 und der Getriebeplatte 10 für das zweite Beschlagelement 1". Die Zahnräder 4.1 bis 4.4 werden im Folgenden insbesondere als Lehnengetriebeplatten 18 (vgl. Figur 12) bezeichnet.

Es versteht sich, dass sich auch andere oder mehrere, aber eben nicht alle, Zahnradpaare unter Normallast in Eingriff befinden können (beispielsweise zwei (etwa 4.1 und 4.2 mit 5.1 und 5.2) Zahnradpaare in Eingriff und zwei Zahnradpaare (etwa 4.3, 4.4, 5.3 und 5.4) nicht in Eingriff). Ebenso ist denkbar, den Konturversatz 19 auf die Bereiche der Zahnradkontur zu beschränken, die andernfalls bei Normallast in Kontakt mit der zugeordneten Verzahnung kommen würden. Alternativ oder zusätzlich kann vorgesehen werden, einige der innenverzahnten Zahnräder 5.1 bis 5.4 mit einem Konturversatz 19 auszustatten.

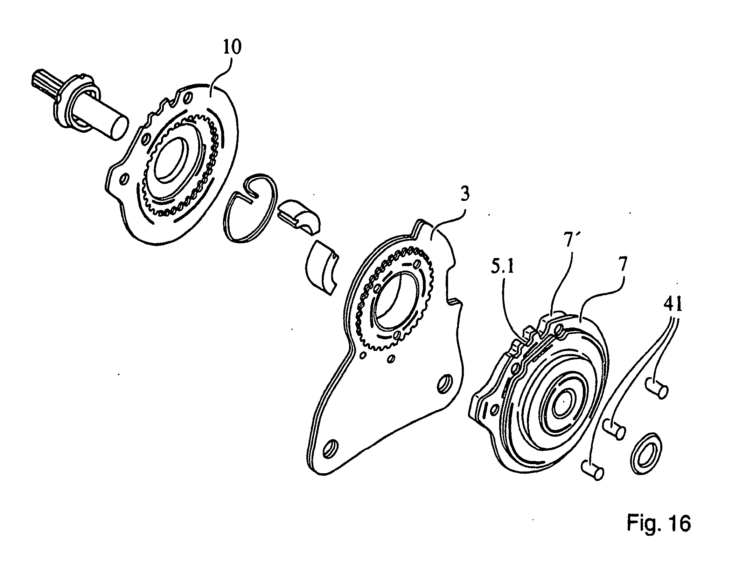

Figur 16 zeigt eine zusätzliche Explosionsdarstellung des Neigungsverstellers bzw. Beschlags. In diesem Fall ist das Verstärkungselement 7' mit beiden Getrieberastplatten 7 jeweils verschweißt. Das Verstärkungselement 7' weist eine nominale Kontur auf. Die Rastverzahnung der innenverzahnten Zahnräder 5.1, 5.4 hat gegenüber dem Verstärkungselement 7' einen Versatz, um Toleranzen auszugleichen. Der Neigungsversteller wird mit Nieten 41 zusammengehalten, um höher belastbar zu sein.

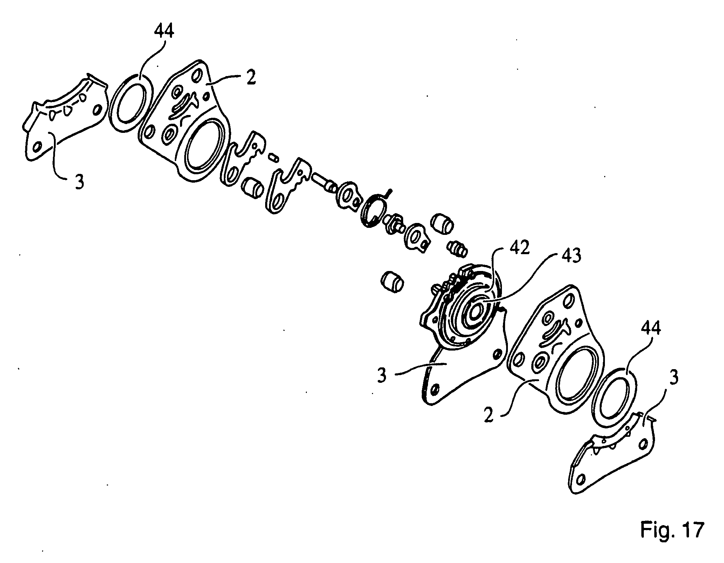

Figur 17 zeigt noch eine zusätzliche Explosionsdarstellung des Neigungsverstellers bzw. Beschlags. In diesem Fall sind die ersten Beschlagteile 2 mittels Lagerplatten 43 drehbar an dem zweiten Beschlagteil gelagert. Die Lagerplatten sind an Abdeckplatten 42 angeschweißt. Außerdem weist dieser Neigungsversteller axiale Anschläge 44 für die ersten Beschlagteile 2 auf.

### Bezugszeichenliste:

- 1: Neigungsversteller
- 2: erstes Beschlagteil (lehnenfest)
- 3: zweites Beschlagteil (sitzteilfest)
- 4: Verstellgetriebe
- 4.1 bis 4.4: außenverzahnte Zahnräder
- 5: Rastklinke
- 5.1 bis 5.4: innenverzahnte Zahnräder
- 5': Spermocke
- 5": Rastvorrichtung
- 6: Ausnehmung
- 7: Getrieberastplatte
- 7': Verstärkungselement
- 8, 9: Verzahnung
- 10: Getriebeplatte
- 11: Außenumfang
- 12: Lagerplatte
- 13: Drehachse
- 14: Bohrung
- 15: Abschlussplatte
- 16: Außenumfang
- 18: Lehnengetriebeplatte
- 19: Konturversatz
- 20: Lehnenteil
- 30: Sitzteil
- 32, 32': Gruppen von außenverzahnten Zahnrädem
- 33, 33': Gruppen von innenverzahnten Zahnrädern
- 36, 36': Halteelemente
- 37: Mittelachse
- 40: Lagerelement
- 41: Befestigungsmittel, Nieten
- 42: Abdeckmittel, Abdeckplatte
- 43: Lager, Lagerplatte
- 44: axialer Anschlag

## Patentansprüche

1. Fahrzeugsitz, insbesondere Kraftfahrzeugsitz, mit einem Lehnenteil (20), mit einem Sitzteil (30) und mit einem Beschlag (1) zur Neigungsverstellung des Lehnenteils (20) relativ zum Sitzteil (30), wobei der Beschlag (1) ein mit dem Lehnenteil (20) fest verbundenes erstes Beschlagteil (2) und ein mit dem Sitzteil (30) fest verbundenes zweites Beschlagteil (3) aufweist, wobei die Beschlagteile (2, 3) über ein Verstellgetriebe (4) stufenlos winkelverstellbar miteinander verbunden sind, wobei das erste Beschlagteil (2) mittels einer Rastvorrichtung (5") gegenüber dem Verstellgetriebe (4) arretierbar ist und nach Lösung der Rastvorrichtung (5") gegenüber dem Verstellgetriebe (4) um eine Schwenkachse (13) verschwenkbar ist, wobei das Verstellgetriebe(4) eine innenverzahnte Getrieberastplatte (7) und/oder eine innenverzahnte Getriebeplatte (10) aufweist, wobei das erste Beschlagteil (2) in einer senkrecht zur Drehachse (13) verlaufenden Ebene der Innenverzahnung der Getrieberastplatte (7) und/oder der Getriebeplatte (10) gegenüber dem Verstellgetriebe (4) gelagert ist, **dadurch gekennzeichnet, dass** der Beschlag (1) eine Lagerplatte (12) aufweist, wobei das erste Beschlagteil (2) zusätzlich zur Getriebeplatte (10) von der Lagerplatte (12) radial gelagert ist.

2. Fahrzeugsitz nach Anspruch 1, **dadurch gekennzeichnet, dass** das Verstellgetriebe (4) eine innenverzahnte Getrieberastplatte (7) und/oder eine innenverzahnte Getriebeplatte (10) aufweist, wobei die Getriebeplatte (10) und/oder die Getrieberastplatte (7) im Wesentlichen als ebene Stanztelle vorgesehen ist.

3. Fahrzeugsitz nach einem der vorhergehenden Ansprüche, **dadurch gekennzeichnet, dass** das Verstellgetriebe (4) eine innenverzahnte Getrieberastplatte (7) und/oder eine innenverzahnte Getriebeplatte (10) aufweist, wobei das erste Beschlagteil (2) von der Getriebeplatte (10) radial gelagert ist und/oder das erste Beschlagteil (2) von der Getrieberastplatte (7) axial gelagert ist.

4. Fahrzeugsitz nach einem der vorhergehenden Ansprüche, **dadurch gekennzeichnet, dass** der Beschlag (1) eine Abschlussplatte (15) aufweist, wobei das erste Beschlagteil (2) einerseits von der Getrieberastplatte (7) und andererseits von der Abschlussplatte (15) axial gelagert ist.

5. Fahrzeugsitz nach einem der vorhergehenden Ansprüche, **dadurch gekennzeichnet, dass** die Getrieberastplatte (7), die Getriebeplatte (10), Lagerplatte (12) und die Abschlussplatte (15) fest miteinander verbunden vorgesehen sind, insbesondere geschweißt sind.

6. Fahrzeugsitz nach einem der vorhergehenden Ansprüche, **dadurch gekennzeichnet, dass** der Beschlag (1) zwei Beschlagelemente (1', 1") spiegelsymmetrisch zu einer senkrecht zur Drehachse verlaufenden Symmetrieebene (A) aufweist, wobei jedes der Beschlagelemente (1'. 1") die Getrieberastplatte (7) und die Getriebeplatte (10) und die Lagerplatten (12) und die Abschlussplatte (15) oder die Getrieberastplatte (7) und die Getriebeplatte (10) und die Abschlussplatte (15) aufweist.

7. Fahrzeugsitz nach einem der vorhergehenden Ansprüche, **dadurch gekennzeichnet, dass** das Lehnenteil (20) in mindestens einer Position an dem zweiten Beschlagteil (3) oder an einer direkt mit dem Sitzteil (30) verbundenen Halterung (7) arretierbar ist.

8. Fahrzeugsitz nach einem der vorhergehenden Ansprüche, **dadurch gekennzeichnet, dass** die Rastvonichtung (5") eine Rastklinke (5) ist, wobei die Rastklinke Insbesondere mit einer Spermocke (5') verriegelbar und betätigbar vorgesehen ist.

9. Fahrzeugsitz nach einem der vorhergehenden Ansprüche, **dadurch gekennzeichnet, dass** der Beschlag (1) zwei Beschlagelemente (1', 1") spiegelsymmetrisch zu einer senkrecht zur Drehachse verlaufenden Symmetrieebene (A) aufweist, wobei jedes der Beschlagelemente (1', 1") die Getrieberastplatte (7) und/oder die Getriebeplatte (10) aufweist und wobei jedes der Beschlagelemente (1', 1") wenigstens eine außenverzahnte Lehnengetriebeplatte (18) aufweist, wobei zwischen den Beschlagelementen (1', 1") ein Konturversatz (19) des Eingriffs der jeweiligen Getrieberastplatte (7) und/oder der jeweiligen Getriebeplatte in der jeweiligen wenigstens einen Lehnengetriebeplatte (18) vorgesehen ist.

10. Fahrzeugsitz nach einem der vorhergehenden Ansprüche, **dadurch gekennzeichnet, dass** der Beschlag (1) zwei Beschlagelemente (1', 1") spiegelsymmetrisch zu einer senkrecht zur Drehachse verlaufenden Symmetrieebene (A) aufweist, wobei jedes der Beschlagelemente (1', 1") die Getrieberastplatte (7) aufweist und wobei zwischen den Beschlagelementen (1', 1") ein Konturversatz des Eingriffs der Getrieberastplatte (7) in die Rastklinke (5) vorgesehen ist.

11. Fahrzeugsitz nach einem der vorhergehenden Ansprüche, **dadurch gekennzeichnet, dass** die Getrieberastplatten (7) der Beschlagelemente (1', 1 ") Ober ein Verstärkungselement (7') miteinander verbunden vorgesehen sind.

## Claims

1. Vehicle seat, in particular motor vehicle seat, with a backrest part (20), with a seat part (30) and with a fitting (1) for adjusting the inclination of the backrest part (20) in relation to the seat part (30), the fitting (1) having a first fitting part (2) which is firmly connected to the backrest part (20), and a second fitting part (3) which is firmly connected to the seat part (30), the fitting parts (2, 3) being connected to one another such that they may be adjusted smoothly in terms of angle by means of an adjusting mechanism (4), the first fitting part (2) being able to be locked in relation to the adjusting mechanism (4) by means of a latching apparatus (5"), and being able to be pivoted about a pivot axis (13) in relation to the adjusting mechanism (4) after the latching apparatus (5") is released, the adjusting mechanism (4) having an internally toothed mechanism latching plate (7) and/or an internally toothed mechanism plate (10), the first fitting part (2) being mounted in a plane, extending perpendicular to the rotational axis (13), of the internal teeth of the mechanism latching plate (7) and/or the mechanism plate (10) in relation to the adjusting mechanism (4), **characterized in that** the fitting (1) comprises a bearing plate (12), the first fitting part (2) in addition to the mechanism plate (10) being radially mounted by the bearing plate (12).

2. Vehicle seat according to Claim 1, **characterized in that** the adjusting mechanism (4) comprises an internally toothed mechanism latching plate (7) and/or an internally toothed mechanism plate (10), the mechanism plate (10) and/or the mechanism latching plate (7) being provided substantially as planar punched parts.

3. Vehicle seat according to one of the preceding claims, **characterized in that** the adjusting mechanism (4) comprises an internally toothed mechanism latching plate (7) and/or an internally toothed mechanism plate (10), the first fitting part (2) being radially mounted by the mechanism plate (10) and/or the first fitting part (2) being axially mounted by the mechanism latching plate (7).

4. Vehicle seat according to one of the preceding claims, **characterized in that** the fitting (1) comprises a cover plate (15), the first fitting part (2), on the one hand, being axially mounted by the mechanism latching plate (7) and, on the other hand, being axially mounted by the cover plate (15).

5. Vehicle seat according to one of the preceding claims, **characterized in that** the mechanism latching plate (7), the mechanism plate (10), the bearing plate (12) and the cover plate (15) are provided firmly connected to one another, in particular welded.

6. Vehicle seat according to one of the preceding claims, **characterized in that** the fitting (1) comprises two fitting elements (1', 1") which are mirror symmetrical to a plane of symmetry (A) extending perpendicular to the rotational axis, each of the fitting elements (1', 1'') comprising the mechanism latching plate (7) and the mechanism plate (10) and the bearing plate (12) and the cover plate (15) or the mechanism latching plate (7) and the mechanism plate (10) and the cover plate (15).

7. Vehicle seat according to one of the preceding claims, **characterized in that** the backrest part (20) may be locked in at least one position to the second fitting part (3) or to a retaining element (7) connected directly to the seat part (30).

8. Vehicle seat according to one of the preceding claims, **characterized in that** the latching apparatus (5'') is a latching pawl (5), the latching pawl in particular being provided to be able to be locked and actuated by a locking cam (5').

9. Vehicle seat according to one of the preceding claims, **characterized in that** the fitting (1) comprises two fitting elements (1', 1'') which are mirror symmetrical to a plane of symmetry (A) extending perpendicular to the rotational axis, each of the fitting elements (1', 1'') comprising the mechanism latching plate (7) and/or the mechanism plate (10) and each of the fitting elements (1', 1'') comprising at least one externally toothed backrest mechanism plate (18), between the fitting elements (1', 1'') a contour offset (19) being provided for the engagement of the respective mechanism latching plate (7) and/or the respective mechanism plate in the respective at least one backrest mechanism plate (18).

10. Vehicle seat according to one of the preceding claims, **characterized in that** the fitting (1) comprises two fitting elements (1', 1'') which are mirror symmetrical to a plane of symmetry (A) extending perpendicular to the rotational axis, each of the fitting elements (1', 1'') comprising the mechanism latching plate (7) and between the fitting elements (1', 1'') a contour offset being provided for the engagement of the mechanism latching plate (7) in the latching pawl (5).

11. Vehicle seat according to one of the preceding claims, **characterized in that** the mechanism latching plates (7) of the fitting elements (1', 1'') are provided connected to one another via a reinforcing element (7').

## Revendications

1. Siège de véhicule, notamment siège de véhicule automobile, comprenant une partie de dossier (20), une partie d'assise (30) et une ferrure (1) pour le réglage de l'inclinaison de la partie de dossier (20) par rapport à la partie d'assise (30), la ferrure (1) présentant une première partie de ferrure (2) connectée fixement à la partie de dossier (20) et une deuxième partie de ferrure (3) connectée fixement à la partie d'assise (30), les parties de ferrure (2, 3) étant connectées l'une à l'autre par le biais d'un mécanisme de réglage (4) de manière continue avec ajustement angulaire, la première partie de ferrure (2) pouvant être verrouillée au moyen d'un dispositif d'encliquetage (5") par rapport au mécanisme de réglage (4) et, après la libération du dispositif d'encliquetage (5"), pouvant être pivotée par rapport au mécanisme de réglage (4) autour d'un axe de pivotement (13), le mécanisme de réglage (4) présentant une plaque d'encliquetage d'engrenage (7) à denture interne et/ou une plaque d'engrenage à denture interne (10), la première partie de ferrure (2) étant montée dans un plan de la denture interne de la plaque d'encliquetage d'engrenage (7) et/ou de la plaque d'engrenage (10) s'étendant perpendiculairement à l'axe de rotation (13), par rapport au mécanisme de réglage (4), **caractérisé en ce que** la ferrure (1) présente une plaque de support (12), la première partie de ferrure (2) étant supportée radialement par la plaque de support (12) en plus de la plaque d'engrenage (10).

2. Siège de véhicule selon la revendication 1, **caractérisé en ce que** le mécanisme de réglage (4) présente une plaque d'encliquetage d'engrenage à denture interne (7) et/ou une plaque d'engrenage à denture interne (10), la plaque d'engrenage (10) et/ou la plaque d'encliquetage d'engrenage (7) étant prévues essentiellement sous forme de pièces estampées planes.

3. Siège de véhicule selon l'une quelconque des revendications précédentes, **caractérisé en ce que** le mécanisme de réglage (4) présente une plaque d'encliquetage d'engrenage à denture interne (7) et/ou une plaque d'engrenage à denture interne (10), la première partie de ferrure (2) étant supportée radialement par la plaque d'engrenage (10) et/ou la première partie de ferrure (2) étant supportée axialement par la plaque d'encliquetage d'engrenage (7).

4. Siège de véhicule selon l'une quelconque des revendications précédentes, **caractérisé en ce que** la ferrure (1) présente une plaque de terminaison (15), la première partie de ferrure (2) étant supportée axialement d'une part par la plaque d'encliquetage d'engrenage (7) et d'autre part par la plaque de terminaison (15).

5. Siège de véhicule selon l'une quelconque des revendications précédentes, **caractérisé en ce que** la plaque d'encliquetage d'engrenage (7), la plaque d'engrenage (10), la plaque de support (12) et la plaque de terminaison (15) sont connectées fixement les unes aux autres, notamment par soudage.

6. Siège de véhicule selon l'une quelconque des revendications précédentes, **caractérisé en ce que** la ferrure (1) présente deux éléments de ferrure (1', 1") à symétrie spéculaire par rapport à un plan de symétrie (A) s'étendant perpendiculairement à l'axe de rotation, chacun des éléments de ferrure (1', 1") présentant la plaque d'encliquetage d'engrenage (7) et la plaque d'engrenage (10) et la plaque de support (12) et la plaque de terminaison (15) ou la plaque d'encliquetage d'engrenage (7) et la plaque d'engrenage (10) et la plaque de terminaison (15).

7. Siège de véhicule selon l'une quelconque des revendications précédentes, **caractérisé en ce que** la partie de dossier (20) peut être verrouillée dans au moins une position sur la deuxième partie de ferrure (3) ou sur une fixation (7) connectée directement à la partie d'assise (30).

8. Siège de véhicule selon l'une quelconque des revendications précédentes, **caractérisé en ce que** le dispositif d'encliquetage (5") est un cliquet d'encliquetage (5), le cliquet d'encliquetage étant notamment pourvu d'une came de verrouillage (5'), de manière verrouillable et actionnable.

9. Siège de véhicule selon l'une quelconque des revendications précédentes, **caractérisé en ce que** la ferrure (1) présente deux éléments de ferrure (1', 1") à symétrie spéculaire par rapport à un plan de symétrie (A) s'étendant perpendiculairement à l'axe de rotation, chacun des éléments de ferrure (1', 1") présentant la plaque d'encliquetage d'engrenage (7) et/ou la plaque d'engrenage (10) et chacun des éléments de ferrure (1', 1") présentant au moins une plaque d'engrenage de dossier (18) à denture extérieure, entre les éléments de ferrure (1', 1") étant prévu un décalage de contour (19) de l'engagement de la plaque d'encliquetage d'engrenage respective (7) et/ou de la plaque d'engrenage respective dans l'au moins une plaque d'engrenage de dossier respective (18).

10. Siège de véhicule selon l'une quelconque des revendications précédentes, **caractérisé en ce que** la ferrure (1) présente deux éléments de ferrure (1', 1") à symétrie spéculaire par rapport à un plan de symétrie (A) s'étendant perpendiculairement à l'axe de rotation, chacun des éléments de ferrure (1', 1") présentant la plaque d'encliquetage d'engrenage (7) et entre les éléments de ferrure (1', 1") étant prévu un décalage de contour de l'engagement de la plaque d'encliquetage d'engrenage (7) dans le cliquet d'encliquetage (5).

11. Siège de véhicule selon l'une quelconque des revendications précédentes, **caractérisé en ce que** les plaques d'encliquetage d'engrenage (7) des éléments de ferrure (1', 1") sont connectées l'une à l'autre par un élément de renforcement (7').
